# EUROPEAN PATENT APPLICATION

(11) **EP 1 101 986 A1**
(43) Date of publication of application: **23.05.2001**
(21) Application number: 99936237.9
(22) Date of filing: 03.08.1999
(51) Int. Cl.: F16K 31/126, F16K 7/17

(54) **ELECTRIC-CONTROL VALVE FOR REGULATING FLOW OF FLUID**

(30) Priority: 05.08.1998 CN 98216444
(71) Applicant: Pan, Zhaokeng, Fo Shan City, Guangdong Province 528000 (CN)
(72) Inventor: Pan, Zhaokeng, Fo Shan City, Guangdong Province 528000 (CN)
(74) Representative: Leszczynski, André
(86) International application number: CN9900106
(87) International publication number: WO0008364

(57) **Abstract**

The invention relates to an electric-control valve for regulating flow of fluid, wherein the water diaphragm front and rear chambers are provided between the inlet and the outlet conduits. The main stream of water flows from the inlet conduit into the outlet conduit through the water diaphragm front chamber and the branch stream of water flows from an auxiliary regulating chamber into the outlet conduit through the water diaphragm rear chamber and a regulating chamber controlled by rotary type electromagnet. The flow of fluid can be regulated continuously and a water heater can be started at a predetermining flow without being subject to the influence of water pressure change and occurring of heating without water according to the output of electric signal of a rotary flowmeter provided in the conduit. The advantages of the invention reside in regulating rapidly, high accuracy of constant flow and the wide range of water pressure, in addition, the invention has better reliability and safety.

## Description

### TECHNICAL FIELD

The invention relates to a fluid flow regulating valve, particularly to an electric controlled fluid flow regulating valve for fully automatic gas water-heater.

### BACKGROUND ART

In current fully automatic gas water-heaters, water gas coupled solenoid valves are commonly used, in which a mechanical galvanostate is installed in the water regulator, and water flow is regulated by turning the cock with a handle. Meanwhile when water flows through the water regulator, a double enclosure of the valve is pushed open by the pressure difference between the front chamber and the rear chambers in the water diaphragm and the igniter switch is turned on to start the operation of gas water-heater. Mechanical constant-current characteristics of the water regulator is restricted by its structure and machining accuracy, when the range of water pressure variation is larger, water flow still experienced a significant change. In order that flow can be electric-controlled, a handle is mounted with gears, the flow is regulated via an electric motor transmission, but its response is slow. When a larger water pressure variation takes place, particularly when the cock is in a weep position, constant-current effect is poor. Meanwhile, since water diaphragm displacement in the water regulator is employed to start the gas water-heater, its starting water pressure is higher and the required starting water pressure difference is larger due to the different setting flow of the water regulator. Moreover, in the long term service of a water regulator, because abrasion or friction aggravation of the rubber seals would occurred in servicing, the water diaphragm may not be reset on water turned off after the water-heater being started, which may result in so-called dry combustion of the water-heater, and user safety is imperiled.

### DISCLOSURE OF THE INVENTION

An object of the invention is to provide an electric-controlled liquid flow regulating valve, which can regulate water flow continuously via water flow variation, and has the features of fast regulation, high constant-current accuracy.

Another object of the invention is to provide an electric-controlled liquid flow regulating valve, an electric signal in the flowmeter after being processed can started the gas water-heater, enables it to be actuated according to a predetermined flow, it shall not be affected by any water pressure variation, and said dry combustion of water heater can be avoided.

The electric-controlled liquid flow regulating valve provided by the invention comprises a valve casing installed with, inlet conduit, outlet conduit. A water diaphragm chamber is installed between the inlet conduit and outlet conduit. A water diaphragm adjusting mechanism is installed in the water diaphragm chamber, which is separated into a front chamber and a rear chamber by the water diaphragm, and the front chamber is communicated with the inlet conduit; a valve port is installed between the front chamber of the water diaphragm and the outlet conduit, with opening and closing of the valve port regulated by the water diaphragm, a flowmeter chamber is installed in inlet conduit or outlet conduit, the flowmeter which can produce electric signal according to water flow variation is installed in the chamber, an inlet channel is installed between the inlet conduit and the position of the front chamber of the water diaphragm, while another inlet channel is installed between the inlet conduit and rear chambers. An outlet channel is installed between the rear chamber of the water diaphragm and the outlet conduit, and a regulating chamber controlled by a flow controller is installed in the outlet channel. A flow controller whose water flow of the outlet channel can be controlled by the electric signal from the flowmeter is installed outside said valve casing. A structure of said water diaphragm regulating mechanism consists of a water diaphragm, a supporting board and a spring. Bosses are installed on the front and back sides centered in the supporting board, the water diaphragm is tightly sheathed into the front boss, and the spring is positioned and mounted between back side of supporting board and the rear chamber wall of the water diaphragm via the back boss. Another structure of the water diaphragm regulating mechanism consists of a water diaphragm, spring on the supporting board, a cone valve core, and a nut. A central hole is installed on the water diaphragm and supporting board, the cone valve core is fastened by the nut after passing through the two above mentioned central holes, and the spring is mounted between the supporting board and rear chamber wall of the water diaphragm. The liquid denoted in the invention comprises an electrically-conducting liquid, e.g. water, and non-electrically-conducting liquid. As for electrically-conducting liquid, said flowmeter may be a rotary flowmeter consisting of a rotor blade and a probe, said probe is mounted on the valve casing corresponding to the rotor blade and being insulated with the valve casing, the probe may be made of stainless steel, the rotor blade is mounted on the valve casing corresponding to the probe, and the valve casing is made of electrically-conducting material and grounded. As for non-conducting fluid, said flowmeter may be a rotary flowmeter, consisting of a Hall unit and rotor blade inlaid with a permanent magnet. A photosensitive receiving tube can also be mounted on the probe position, while a luminotron is mounted on a corresponding geometric position of the photosensitive receiving tube, the photosensitive receiving tube can also receive signals while the blade rotates. The Hall unit is mounted on the valve casing corresponding to the blade position. Said flow controller may be rotary electromagnet, or a stepped motor. An auxiliary flow regulating chamber is installed in said inlet channel, steel balls, springs and adjusting screws are installed in the chamber. For the occasions not scoring high, the steel bulls, springs, and adjusting screws mounted in the auxiliary flow regulating chamber can also be replaced by a small hole serving as an orifice. A valve member is mounted in said regulating chamber, the valve member is mounted on a valve support, and opening, closing of regulating valve port is controlled by the valve member driven by the flow controller.

### BRIEF DESCRIPTIONS OF THE DRAWINGS

Incorporated with the following drawings, a better embodiment of the invention is described in detail, in which:
FIG.1 is a structural schematic of the rotary electric-controlled liquid flow regulating valve in the invention;
FIG.2 is a side view of the rotary electromagnet and a connecting part of valve member shown in FIG.1;
FIG.3 is a cross section view of rotary flowmeter shown in FIG.1;
FIG.4 is a schematic of the electric control of the invention.

### OPTIMUM REALIZATION MODE OF THE INVENTION

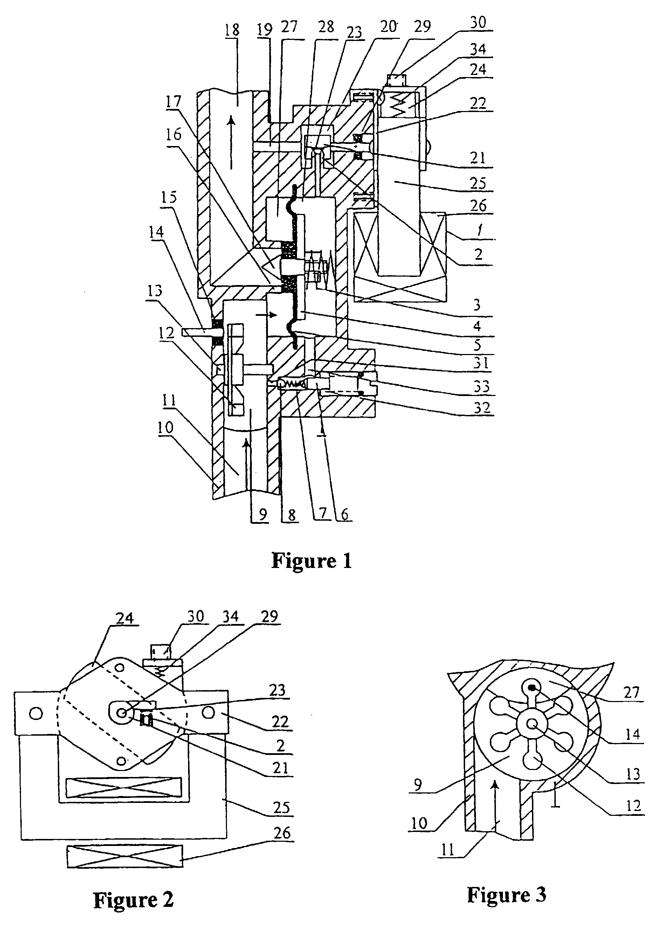

As shown in FIGs 1-4, the rotary electric-controlled liquid flow regulating valve is employed in fully-automatic gas water-heater, The regulating valve comprises a valve casing 10 installed with inlet conduit 11 and outlet conduit 18, They are not directly communicated, while communicated via the water diaphragm chamber installed between inlet conduit 11 and outlet conduit 18. A front chamber 27 and a rear chamber 28 of the water diaphragm are separated by the water diaphragm 5 in the water diaphragm chamber, a supporting board 4 is mounted on the back of the water diaphragm 5, A round boss is centered in the water diaphragm 5, the boss coincides with valve port 16, i.e. the boss carries out opening and closing regulation to valve port 16, The cone valve core 17 penetrates the water diaphragm 5 and a central hole of supporting board 4, and both of them are fastened via a fastening nut, A water diaphragm spring 3 is mounted between the supporting board 4 and the wall of the rear chamber 28 of the water diaphragm, i.e., the water regulating mechanism is formed by the cone valve core 17, the water diaphragm 5 centered with a round boss, the supporting board 4 and the spring 3. The water diaphragm 5 is made of rubber. In a stationary state, the valve port 16 is closed by the round boss of the water diaphragm 5 by way of the elastic force of spring 3. A chamber 9 of rotary flowmeter is installed in the inlet conduit 11. Shaft holes are bored on both side walls of the chamber. Both ends of rotor shaft 13 fastened with the rotor blade 12 are inserted into the two shaft holes respectively, and the rotor blade can rotate flexibly. The probe 14 can be made of stainless steel, it is fastened on the wall of valve casing 10 corresponding with an end face of the rotor blade 12 via an insulating sleeve 15, and the inner end face of the probe 14 and the outside end of the rotor blade 12 are parallelly disposed at a distance of 0.3-1.5mm therebetween. An inlet channel is installed between a segment from inlet conduit 11 to the front chamber 27 of the water diaphragm and the rear chamber 28 of the water diaphragm for raising the constant-current accuracy and the stability. An auxiliary regulating chamber 32 for liquid flow can be installed in the inlet channel. The steel ball 8, the spring 7, and the adjusting screw 6 are mounted in the chamber. The steel ball 8 is placed at the inside of inlet conduit 31 penetrated with the inlet channel and inlet tube 11, i.e. the mounting sequence is the spring 7, and the adjusting screw 6. Then the watering area from the front chamber 27 of the water diaphragm into the rear chamber 28 of the water diaphragm can be changed by way of the adjustment of the screw 6, and a side hole 33 is communicated to the rear chamber 28 of the water diaphragm adjacent to the top of the adjusting screw 6 of the auxiliary regulating chamber 32 of liquid flow. A regulating chamber 20 is installed between the outlet conduit 18 and the rear chamber 28 of the water diaphragm, a regulating valve port 2 in the regulating chamber 20 is communicated with the rear chamber 28 of water diaphragm, and a side hole 19 of the regulating chamber 20 is communicated with the outlet conduit 18. A guardless rotary electromagnet 1 is employed in the embodiment of the invention, which consists of an iron core 25, a coil 26, and a rotary armature 24, the rotary armature 24 is supported on seating 22 fastened to iron core 25 via its shaft 29 and bearing. Both side end faces of the armature 24 have equidistant clearance with respect to the corresponding the side face of the iron core, therefore, it has the features of flatter pull characteristics, strong attraction, particularly rather strong initial attractive force. And the acting force and stroke can also be conveniently varied via changing the length of action arm. Because a stronger acting force is required for the rotary electric-controlled liquid flow regulating valve, it can be convenient by way of strengthening of the acting force via shortening of the arm to vary the current of the coil 26, to regulate the stroke, and to perform a quasi-linear continuous control. A valve support 21 is fastened at the position of the epitaxial end of shaft 29 of rotary armature 24 in the guardless rotary electromagnet 1 corresponding with the regulating valve port 2 in the regulating chamber 20, and the valve member 23 is mounted on the valve support 21, a rubber sealing ring is mounted in the bearing case positioning hole on the valve casing 10, a reset spring 34 is also mounted between the seating 22 of rotary electromagnet and the rotary armature 24, and an adjusting screw 30 is also installed for correction of systemic errors formed by various factors. Rotary electromagnet 1 is mounted at outside of valve casing 10, and shaft 29 fastened with rotary armature 24 is inserted into valve casing 10. The elongated portion of the bearing case on seating 22 is inserted into the bearing positioning hole on the valve casing 10, thereby positioning of shaft 29 can be performed, and a rubber sealing ring is mounted on the shaft in the positioning hole.

Incoming water from the inlet 11 of rotary electric-controlled liquid flow regulating valve can flow to the outlet conduit 18 of the valve via two routes, in which one route is that the main water stream flows through the chamber 9 of the rotary flowmeter, the front chamber 27 of the water diaphragm and the valve port 16 to the outlet conduit 18; another route is that the auxiliary water stream flows through the inlet conduit 31 of the auxiliary regulating chamber 32 of the equivalent front chamber 27 of the water diaphragm, the auxiliary regulating chamber 32 and its side hole 33, the rear chamber 28 of the water diaphragm, the regulating valve port 2, the side hole 19 to outlet conduit 18. In case of de-energization in the rotary electromagnet 1, regulating valve port 2 is caused to be in closing state due to the action of reset spring 34, at this moment there is no auxiliary water stream, the front and the rear chambers of the water diaphragm are isobaric. Water diaphragm 5 is compressed to valve port 16 under the action of spring 3 of the water diaphragm, after the water pressure being applied, the regulating valve is in closing state. When energized and put into operation, the opening and closing extent of the valve member 23 is regulated via variation of the coil current in the rotary electromagnet 1, thereby the auxiliary water flow of valve port 2 is regulated, thereby the front and back pressure difference of the water diaphragm 5 is changed further and caused the opening and closing extent between the central boss of the water diaphragm 5 and valve port 16 to be varied, and the main water flow is also changed. In case of above structure is invariant, a stepped motor can be used in replacement of the rotary electromagnet.

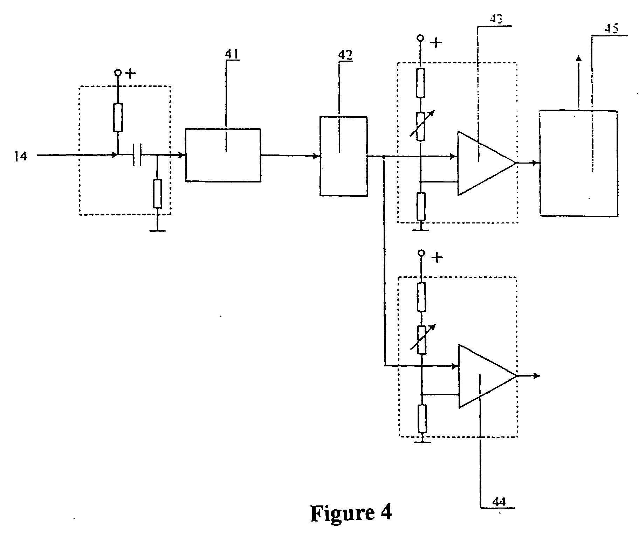

When water flows through chamber 9 of the rotary flowmeter, rotating speed of rotor blade 12 with respect to the water flow shows a quasi-linear relation. Rotor blade 12 is made of insulating material. Valve casing 10 is made of metal and grounded. When rotor blade 12 is rotating, the equivalent area and length of the probe 14 in contact with water is changed increasingly, thereby a quasi-sinusoidal electric signal can be attained on the probe 14, and the amount of water flow can be detected by way of the frequency of the signal. As shown in FIG.4, after processed by the signal amplifier 41, D/A converter 42, one route of the signal passed through the comparator 43 in comparison with the predetermined voltage of the water flow, then it is supplied to the electric current of the rotary electromagnet 1 via the voltage and current switching controller 45. When the water pressure is raising, the rotating speed of the rotor blade 12 is quickened, the output signal frequency of the probe 14 accelerates, voltage after D/A conversion is higher than the predetermined voltage of the water flow, the current provided to the rotary electromagnet reduced, auxiliary water flow also decreased, the opening and closing extent between the water diaphragm 5 and valve port 16 shortened. In the contrary, when water pressure is lowered, the opening and closing extent between the water diaphragm 5 and the valve port 16 extended. Above process caused the water flow to be more accurately controlled in constant current adjacent to the predetermined point. If the voltage is changed at the predetermined point, water flow can be easily varied, and constant-current characteristics shall not be greatly affected due to water flow variation. After processed by signal amplifier 41 and D/A converter 42, another route of the signal goes to the comparator 44 in comparison with the predetermined voltage of the initial water flow of the water-heater, when the water flow reached or surpassed the predetermined flow, the water-heater starts, thereby the starting of the water-heater is only dependent on the water flow.

The function of the steel ball 8 and the steel ball spring 7 in the auxiliary regulating chamber 32 is that when the water pressure is lower, due to the action of the steel ball spring 7, steel ball 8 is compressed to the inlet conduit 31 of the chamber, thereby the effective watering area of the auxiliary water flow in the rear chamber 28 of the water diaphragm is reduced, so as to improve the constant-current characteristics in case of the lower water pressure; while when inlet conduit water pressure suddenly raised, the steel ball 8 rapidly retreats , the pressure of the rear chamber 28 of the water diaphragm is raised, the opening extent of the valve port 16 rapidly lowered; on the contrary, when the inlet conduit water pressure suddenly lowered, the steel ball 8 quickly pushed forward, the opening extent of the valve port 16 rapidly raised again, thereby so called water hammer is avoided, and the regulating speed of the regulating valve is accelerated.

The valve core 17 is made into a conical head to improve linearity of the regulating valve.

By above embodiment it can be seen that, since the guardless rotary electromagnet has been employed in the invention, the features of flat pull characteristics, strong attraction, and changes of acting point and acting force by variation of arm length being attained, thereby it is suited for the requirement of strong acting force needed for liquid flow control, in application of rotary electromagnet, and the valve member stroke can be easily extended in case of using the following features ,i.e.: if an action stroke elongation is required, only extension of concave-cambered surfaces and relevant convex cambered surfaces on both sides of the iron core is demanded, and any increasing of the power loss of the electromagnet is not needed.

### INDUSTRIAL APPLICABILITY

Employing a flowmeter which can generate a current according to flow variation, e.g. detection of flow signal by a rotary flowmeter, the action of the rotary electromagnet can be controlled via signal processing, the invention can regulate flow conveniently and constantly, and the water-heater can be started by flow signal after signal processing, resulted in that the starting of the overall unit of the water heater is only dependent on the flow. In addition, when the rotor blade of the rotary flowmeter being chucked due to some reason, the water-heater cannot be started, thereby the dry combustion resulted by water valve problems can be avoided. In brief, in contrast with prior art, the invention has the following advantages.
1.A fast and convenient regulation, a high constant-current accuracy, and a broad rang for the water pressure adjusting;
2. Since no dry combustion shall take place when a certain part in the valve is chucked, the overall unit can attain a good reliability and safety.

## Claims

1. An electric-controlled liquid flow regulating valve, comprises a valve casing involving an inlet conduit, an outlet conduit, wherein a water diaphragm chamber is installed between the inlet conduit and the outlet conduit, a water diaphragm regulating mechanism in the water diaphragm chamber which is separated into a front chamber and a rear chamber of the water diaphragm by the water diaphragm, the front chamber of the water diaphragm is communicated with the inlet conduit, the valve port whose opening and closing being regulated by a water diaphragm regulating mechanism is installed between the front chamber of the water diaphragm and the outlet conduit, a chamber of the rotary flowmeter is installed in the inlet conduit or the outlet conduit, a flowmeter which can produce electric signal according to flow variation is mounted in the chamber, an inlet conduit channel is installed between the inlet conduit and the front chamber of the water diaphragm, and another inlet conduit channel being installed between the front chamber and the rear chamber of the water diaphragm respectively, an outlet channel is installed between the rear chamber of water diaphragm and the outlet conduit, and a regulating chamber controlled by a flow controller is installed in the outlet channel, the flow controller controlling the water flow of the outlet channel according to the electric signal from the flowmeter is installed outside the valve casing.

2. Said regulating valve according to claim 1, wherein, as regards to the electrically conducting fluid, said flowmeter is a rotary flowmeter consisting of a rotor blade and a probe, the probe is mounted on the valve casing corresponding to the rotor blade and is insulated with the valve casing, and the rotor blade is mounted on the valve casing corresponding to the probe.

3. Said regulating valve according to claim 1, wherein, as regards to electrically non-conducting fluid, said flowmeter is the rotary flowmeter, comprising a Hall unit and a rotor blade inlaid with a permanent magnet, and the Hall unit is mounted on the valve casing corresponding with the rotor blade.

4. Said regulating valve according to claim 1, wherein, a regulating chamber of auxiliary flow is installed in said inlet conduit channel, and a steel ball, a spring and an adjusting screw are mounted in the chamber.

5. Said regulating valve according to claim 1, wherein, a valve member is mounted in said regulating chamber, the valve member is mounted on a valve support, and the valve member is brought to motion to perform opening and closing control for the valve port by the flow controller.

6. Said regulating valve according to claim 1, wherein, said flow controller is a rotary electromagnet.

7. Said regulating valve according to claim 1, wherein, said flow controller is a stepped motor.

8. Said regulating valve according to claim 1, wherein, the electric signal of said flowmeter after gone through an amplifier and a D/A converter, passes through a comparator in comparison with the predetermined voltage of the water flow, then the electric current is provided to the flow controller via a voltage current switching controller so as to be able to control the water flow of the outlet channel.

9. Said regulating valve according to claim 1, wherein, after passed through an amplifier and a D/A converter, the electric signal of said flowmeter compares in a comparator with the predetermined voltage of the starting flow of the water-heater so as to control and start the gas water-heater.

10. Said regulating valve according to claim 1, wherein, a structure of said water diaphragm regulating mechanism consists of a water diaphragm, a supporting board, and a spring, bosses are installed on the front and the back sides centered on the supporting board, the water diaphragm is tightly sheathed into the front boss, the spring is positioned and mounted by the back boss between the back side of the supporting board and Th rear chamber wall of the water diaphragm.

11. Said regulating valve according to claim 1, wherein, another structure of said water diaphragm regulating mechanism consists of a water diaphragm, a supporting board, a spring, a cone valve core, and a nut, central holes are installed on the water diaphragm and the supporting board, after the cone valve core passed though the two above central holes, it is fastened by the nut, and the spring is mounted between the supporting board and the water diaphragm.
